(19) Europäisches Patentamt
European Patent Office
Office européen des brevets

(11) Publication number: 0 220 555 A2

(12) **EUROPEAN PATENT APPLICATION**

(21) Application number: 86113907.9

(22) Date of filing: 07.10.86

(51) Int. Cl.4: C 09 J 3/14, C 08 F 220/00, C 08 F 291/00

(30) Priority: 07.10.85 US 784971

(43) Date of publication of application: 06.05.87 Bulletin 87/19

(84) Designated Contracting States: BE DE FR GB IT NL

(71) Applicant: LORD CORPORATION, 2000 West Grandview Boulevard, Erie Pennsylvania 16441 (US)

(72) Inventor: Zalucha, Denis Jerome, RD No. 1 French Creek Road, Erie Pennsylvania 16441 (US)

(74) Representative: Blumbach Weser Bergen Kramer Zwirner Hoffmann Patentanwälte, Radeckestrasse 43, D-8000 München 60 (DE)

(54) **Structural adhesive formulations.**

(57) Two-pack adhesive systems which are curable by free radical polymerization at room temperatures are disclosed. The adhesives bond a variety of substrates, including metals and plastics. The adhesives comprise a first part containing free radical polymerizable unsaturated monomer and free radical source and a second part comprising free radical polymerizable unsaturated monomer and an activator compound for the free radical source. The activator compound is a bicyclic amidine, with 1,8-diaza-bicyclo [5.4.0] undec-7-ene being especially preferred. The use of cupric salts enhances polymerization rate.

EP 0 220 555 A2

# STRUCTURAL ADHESIVE FORMULATIONS

## Field of the Invention

The present invention relates to structural adhesive compositions. More particularly, the invention relates to equal mix, multi-pack structural adhesives comprising at least one free radical-polymerizable unsaturated monomer, which are especially suitable for bonding a variety of substrates, including metal and plastic substrates.

Free radical-polymerizable structural adhesives are well known compositions of matter. Such adhesives typically comprise a mixture of one or more olefinically-unsaturated reactive monomers and curing agents, with cure being effected through a free radical polymerization mechanism. The adhesives preferably contain one or more polymeric materials which may or may not be reactive, that is, capable of being polymerized *per se* or at least capable of interpolymerizing with the reactive monomers, such as grafting onto or crosslinking the growing polymers from the reactive monomer polymerization. In addition, the adhesives can contain other additives for improving adhesion to substrate materials, environmental resistance, impact resistance, flexibility, heat resistance and other properties.

The curing agents for such adhesives typically includes an initiator compound, such as a peroxygen compound, which generally interacts with another compound, which can be termed an accelerator or activator compound, to produce free radicals which are effective to initiate and propogate cure of the compositions. A plethora of curing agents are known such as the combination of organic peroxygen compounds, sulfonyl chloride-containing compounds, tertiary amines, organic salts of transition metals and aldehyde-amine condensation products (USA Patent 3,890,407); organic peroxygen compounds, tertiary amines and, optionally, an oxidizable heavy metal compound or salt (USA Patent 4,126,504); peroxygen compounds, tertiary amines, aldehyde-amine condensation products and transition metal-containing compounds (USA Patent 4,299,942); peroxides and tertiary amines (USA Patent 3,333,025); peroxides and amines (USA Patent 3,832,274); methyl ethyl ketone hydroperoxide and cobalt naphthenate (USA Patent 3,838,093); and amines, transition metal salts, amine-aldehyde condensation products and peroxides (USA Patent 3,994,764).

It is well known in the art that while the decomposition *per se* of peroxygen free radical sources is a function of half-life temperature, the interaction between such free radical sources and activator compounds such as amines and transition metals is independent of the half-life temperature of the peroxygen compound and proceeds rapidly at room temperature. It is also well known that peroxygen free radical sources slowly decompose over time at ambient temperatures even in the absence of activator compounds. Thus, to avoid premature interaction between the free radical source and the activator compounds and polymerizable materials, adhesive compositions which are curable at room temperature by polymerization agents comprising peroxygen free radical sources and activator compounds are sold commercially as multi-package systems, with the free radical source being contained in a package which does not contain either activator compounds or polymerizable materials. The separate packages are intermixed at time of use. Because the separate packages are of unequal volume, the contents of the separate packages are combined at odd mix ratios. When mixing is done using metered equipment, constant calibration of mixing orifices is necessary in order to ensure that the correct mix ratio is being utilized.

Piestert USA Patent 4,343,921 discloses adhesive compositions comprising ethylenically unsaturated compounds which are cured employing as a polymerization agent peroxygen free radical sources and an activator compound comprising an organic material derived from the leuco sulphuric ester of an indigo or thioindigo dye. The compositions of Piestert are multi-pack systems in which the free radical source and the activator compound are separately packaged and the individual packages are mixed at time of use. Piestert discloses that each of the separate packages may contain polymerizable materials, with polymerization inhibitors being employed with the free radical source. Dohi et al USA Patent 4,403,058 disclose equal mix two-package adhesives comprising ethylenically unsaturated compounds which are cured employing as a polymerization agent peroxygen free radical sources and an activator compound comprising metal chelate compounds, metal soaps and sulfur-containing compounds, with the free radical source and the activator compounds being separately packaged. Mcginnis USA Patent 4,446,246 disclose a third species of equal mix two package adhesive compositions comprising polymerizable unsaturated materials cured with a polymerization agent comprising peroxygen free radical sources and an activator compound comprising cuprous copper compounds or furfuryl alcohol and an acid catalyst, with the free radical source and the activator compound being separately packaged.

In accordance with the present invention, there are now provided two-part structural adhesive compositions wherein the separate parts can be admixed in equal amounts, by volume or weight, and which provide performance characteristics which equal or surpass those of the previously known disparate mix two-part acrylic adhesive compositions. The two-pack acrylic adhesive compositions of the invention are unexpectedly tolerable to wide variations in mix ratio, that is, the adhesives are curable at mix ratios other than unity (as well as at unity) with no substantial loss in adhesion performance, thus reducing the need for constant calibration of mixing orifices. In addition, the adhesive compositions of the invention allow the formulator to more successfully address the problems of odor, flash point and cure rate in his attempts to more fully meet the needs of his customers.

More particularly, there are provided novel two-part structural adhesive compositions comprising at least one olefinically unsaturated reactive monomer and a curing agent consisting essentially of at least one peroxygen compound selected from the group consisting of hydrogen peroxide, organic hydroperoxides and organic peroxyesters; and at least one bicyclic amidine compound. The curing agent which must be employed in the practice of this invention unexpectedly permits each of the two packs to be admixed by equal volume or weight without an adverse effect on adhesive performance or shelf stability and also permits the formulator to more effectively modify the adhesive to the user's needs.

The novel structural adhesive compositions of the invention comprise, in combination

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein of tract amounts up to 5 percent by weight, based on weight of modified elastomeric polymeric material, of at least one functional monomer; and

(d) mixtures thereof;

(3) at least one polymer-in-monomer syrup consisting essentially of

(a) from 10 to 98 percent by weight of at least one olefinically unsaturated monomer compound having at least one $-\overset{|}{C}=\overset{|}{C}-$ group, the amount being in addition to the amount of olefinically unsaturated monomer (A);

(b) from 10 to 98 percent by weight of at least one polymer derived from such (3)(a) monomers; and

(c) from 0 to 30 percent by weight of a polymer containing the group $-(CH_2CCl=CHCH_2)_n-$, wherein n is an integer;

wherein (3)(b) is present as a partial polymerization of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer in which syrup the amount of (3)(b) derived from (3)(a) is in the range from 2 to 90 percent by weight, based on the total weight of (3)(a), (3)(b) and (3)(c); the amount of said (B)(3)(a) monomer being in addition to the amount of monomer (A);

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one monomer selected from the group consisting of styrene and alkyl or hydroxyalkyl esters of acrylic or methacrylic acid, said ester having from one to 18 carbon atoms in the alkyl moiety;

(6) at least one polymeric material having at least one terminal olefinically unsaturated group, said polymeric material being selected from the group consisting of, (1) at least one adduct of at least one ethylenically unsaturated monofunctional isocyanate and at least one polymeric material containing one or more active hydrogen atom-containing moiety(ies) selected from the group consisting of -OH, $-NH_2$, -NH-, $-\overset{O}{\widehat{C-C}}-$, -SH and -COOH; and, (2) at least one adduct of at least one reactive monomer having at least one terminal olefinically unsaturated group and at least one reactive moiety selected from the group consisting of -OH, -NH-, $-\overset{O}{\widehat{C-C}}-$, -SH and -COOH; and at least one polymeric material which contains at least one moiety which is reactive with said reactive moiety of said reactive monomer, provided that, when said reactive moiety is -OH, said polymeric material does not contain a reactive -NCO group; and

(7) mixtures of such polymeric materials; and

(C) a curing agent comprising

(1) at least one peroxygen compound selected from the group consisting of hydrogen peroxide, peroxyesters, hydroperoxides, peroxycarbonates, peroxyketones and diacyl peroxides;

(2) at least one bicyclic amidine compound.

The free radical-polymerizable structural adhesive compositions of the invention are normally provided as two-package adhesive systems, with equal amounts, by weight or volume, of the package being mixed at the time of use. These adhesive compositions comprise

(I) a first package comprising

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein of trace amounts up to 5 percent by weight, based on weight of modified elastomeric polymeric material, of at least one functional monomer; and

(d) mixtures thereof;

(3) at least one polymer-in-monomer syrup consisting essentially of

(a) from 10 to 98 percent by weight of at least one olefinically unsaturated monomeric compound having at least one $-\overset{|}{C}=\overset{|}{C}-$ group the amount being in addition to the amount of olefinically unsaturated monomer (A);

(b) from 10 to 98 percent by weight of at least one polymer derived from such (3)(a) monomers; and

(c) from 0 to 30 percent by weight of a polymer containing the group $(CH_2CCl = CHCH_2)_n$, wherein n is an integer;

wherein (3)(b) is present as a partial polymerization of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer, in which syrup the amount of (3)(b) derived from (3)(a) is in the range from 2 to 90 percent by weight, based on the total weight of (3)(a), (3)(b) and (3)(c), wherein the amount of said (I)(B)(3)(a) monomer is in addition to the amountof (I)(A) monomer;

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one monomer selected from the group consisting of styrene and alkyl or hydroxyalkyl esters of acrylic or methacrylic acid, said ester having from one to 18 carbon atoms in the alkyl moiety; and,

(6) at least one polymeric material having at least one terminal olefinically unsaturated group, said polymeric material being selected from the group consisting of, (1) at least one adduct of at least one ethylenically unsaturated monofunctional isocyanate and at least one polymeric material containing one or more active hydrogen atom-containing moiety(ies) selected from the group consisting of -OH, $-NH_2$, -NH-, 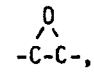, -SH and -COOH; and, (2) at least one adduct of at least one reactive monomer having at least one terminal olefinically unsaturated group and at least one reactive moiety selected from the group consisting of -OH, $-NH_2$, -NH-, 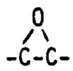, -SH and -COOH, and at least one polymeric material which contains at least one moiety which is reactive with said reactive moiety of said reactive monomer, provided that, when said reactive moiety is -OH, said polymeric material does not contain a reactive -NCO group; and

(7) mixtures of such polymeric materials; and,

(C) at least one bicyclic amidine compound; and

(II) a second package comprising

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least 1 unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein of trace amounts up to 5 percent by weight, based on weight of modified elastomeric polymeric material, of at least one functional monomer; and

(d) mixtures thereof;

(3) at least one polymer-in-monomer syrup consisting essentially of

(b) from 2 to 90 percent by weight of at least one polymer derived from such (3)(a) monomers; and

(a) from 10 to 98 percent by weight of at least one olefinically unsaturated monomeric compound having at least one $-\overset{|}{C}=\overset{|}{C}-$ group;

(c) from 0 to 30 percent by weight of a polymer containing the group $\left( CH_2CCl = CHCH_2 \right)_n$, wherein n is an integer;

wherein (3)(b) is present as a partial polymerization product of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer, in which syrup the amount of (3)(b) derived from (3)(a) is in the range from 2 to 90 percent by weight, based on the total weight of (3)(a), (3)(b) and (3)(c), wherein the amount of said (II)(B)(3)(a) monomer is in addition to the amount of said (II)(A) monomer;

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one monomer selected from the group consisting of styrene and alkyl or hydroxyalkyl esters of acrylic or methacrylate acid, said ester having from one to 18 carbon atoms in the alkyl moiety;

(6) at least one polymeric material having at least one terminal olefinically unsaturated group, said polymeric material being selected from the group consisting of, (1) at least one adduct of at least one ethylenically unsaturated monofunctional isocyanate and at least one polymeric material containing one or more active hydrogen atom-containing

moiety(ies) selected from the group consisting of -OH, $-NH_2$, -NH-, 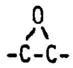, -SH and -COOH; and, (2) at least one adduct of at least one reactive monomer having at least one terminal olefinically unsaturated group and at least one reactive moiety selected from the group consisting of -OH, $-NH_2$, -NH-, 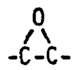, -SH and -COOH, and at least one polymeric material which contains at least one moiety which is reactive with said reactive moiety of said reactive monomer, provided that, when said reactive moiety is -OH, said polymeric material does not contain a reactive -NCO group; and

(7) mixtures of such polymeric materials; and

(C) at least one peroxygen compound selected from the group consisting of hydrogen peroxide, peroxyesters, organic hydroperoxides, peroxycarbonates, peroxyketones and diacyl peroxides.

Each individual package of the adhesive compositions of the invention can optionally contain up to 30, preferably not more than 15 percent by weight, based on total weight of the individual package, of at least one polymeric material having an intrinsic viscosity in the range from 0.1 to 1.3, such polymeric material being obtained from the polymerization or copolymerization of at least one styrene monomer, acrylic monomer, substituted acrylic monomer, olefinically-unsaturated non-acrylic monomer or mixtures thereof; the total amount of such optional additive, when present in both packages, not exceeding 60, preferably 30, percent by weight, based on the combined weight of both packages; up to 20, preferably not more than 15, percent by weight, based on total weight of the package, of at least one elastomeric material having a second order glass transition temperature below 5°C; with the total amount of elastomeric material, when present in both packages, not exceeding 40, preferably 30, percent by weight, based on the combined weight of both packages; up to 5 percent by weight of at least one unsaturated dicarboxylic acid ester; up to 10 percent by weight of at least one unsaturated polyester resin; up to 20 percent by weight of at least one unsaturated carboxylic acid having one or more. preferably one, carboxylic acid group; and up to one percent by weight of at least one waxy substance selected from the group consisting of paraffin wax, montan was, beeswax, ceresin wax and spermaceti wax.

The invention further provides a method for bonding mating surfaces of two or more metal or plastic substrates comprising applying to at least one of such surfaces a room temperature-curable adhesive composition comprising

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein by trace amounts up to 5 percent by weight, based on weight of modified elastomeric material, of at least one functional monomer; and

(d) mixtures thereof;

(3) at least one polymer-in-monomer syrup consisting essentially of

(a) from 10 to 98 percent by weight of at least one olefinically unsaturated monomeric compound having at least one $-\overset{|}{C}=\overset{|}{C}-$ group;

(b) from 2 to 90 percent by weight of at least one polymer derived from such (3)(a) monomers;

(c) from zero to 30 percent by weight of at least one polymer containing the group $-(CH_2CCl=CHCH_2)_n-$, wherein n is an integer;

wherein (3)(b) is present as a partial polymerization product of (3)(a) or of (3)(a) in the presence of (3)(c); the mixture of

(3)(a) and (3)(b) or of (3)(a), (3)(b) and (3)(c) being a syrup of polymer dissolved or dispersed in unpolymerized monomer, in which syrup the amount of (3)(b) derived from (3)(a) is in the range from 2 to 90 percent, based on the total weight of (3)(a), (3)(b) and (3)(c), the amount of said (B)(3)(a) monomer being in addition to the amount of said (A)(3) monomer;

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one olefinically unsaturated monomer selected from the group consisting of styrene and alkyl or hydroxyalkyl esters of acrylic and methacrylic acid, said ester having one to 18 carbon atoms in the alkyl moiety;

(6) at least one polymeric material having at least one terminal olefinically unsaturated group; said polymeric material being selected from the group consisting of, (1) at least one adduct of at least one ethylenically unsaturated monofunctional isocyanate and at least one polymeric containing one or more active hydrogen moieties selected from the group consisting of -OH, $-NH_2$, -NH-, $-\overset{O}{C-C}-$, -SH and -COOH; and, (2) at least one adduct of at least one reactive monomer having at least one terminal olefinically unsaturated group and at least one reactive moiety selected from the group consisting of -OH, $-NH_2$, -NH-, $-\overset{O}{C-C}-$, -SH and -COOH, and at least one polymeric material which contains one or more moieties which are reactive with said reactive moiety of said reactive monomer, provided that, when said reactive moiety is -OH, said polymeric material does not contain a reactive -NCO group; and

(7) mixtures of such polymeric materials;

(C) at least one bicyclic amidine compound; and

(D) at least one peroxygen compound selected from the group consisting of hydrogen peroxide, peroxyesters, peroxycarbonates, peroxyketones, diacyl peroxides and hydroperoxides; placing the mating surfaces in abutting relationship until the adhesive composition cures to effect bonding of said surfaces.

Polymer-in-monomer syrups suitable for use in the present invention, compositionally as well as their preparation, are well-known in the art. Representative syrups, including precursor liquid monomer compounds containing at least one olefinically unsaturated group, and their preparation are disclosed in USA Patent Nos. 3,333,025; 3,725,504; and 3,873,640. Briefly, such syrups are conveniently prepared by de-aerating the starting mixture consisting essentially of at least one polymerizable liquid olefinically unsaturated compound and, when used, polymer containing the group $-(CH_2CCl = CHCH_2)_n-$, for a short period at about 40°C under vacuum and then heating the mixture to about 75°C under an inert gas atmosphere. A catalyst, for example, a free radical-generating catalyst such as benzoyl peroxide or azodiisobutyric acid dinitrile, is then added, preferably in the form of a solution. The quantity of catalyst added is such that it will be completely consumed when the desired viscosity is reached. After the reaction is completed, the polymer-in-monomer syrup is cooled. Preferably, the syrups have a viscosity in the range from about 500 to about 1,000,000 mPa·s at 20°C.

Monomeric liquid olefinically unsaturated compounds suitable for use in the adhesive compositions of the invention for forming polymer-in-monomer syrups and as additional polymerizable materials are characterized by the presence of at least one $-\overset{|}{C}=\overset{|}{C}-$ group. The olefinically unsaturated group is preferably a vinyl group, more preferably terminally located, with acrylic and substituted acrylic monomers being currently preferred. When olefinically unsaturated monomers which do not contain acrylic or methacrylic groups are employed, each individual package of the adhesive compositions should not contain more than 30, preferably not more than 15, percent by weight, based on the total weight of the individual package, with the total amount of such non-acrylic monomers being not more than 50, preferably not more than 25 percent by weight, based on the total weight of both packages. Representative olefinically unsaturated monomers include, without limitation, methyl methacrylate, butyl methacrylate, ethyl acrylate, diethylene glycol dimethacrylate, methacrylic acid, acrylic acid, acrylonitrile, methacrylonitrile, styrene, vinyl styrene, vinyl acetate, chlorostyrene, glycidyl methacrylate, itaconic acid, acrylamide, methacrylamide, vinylidene chloride, 2,3-dichloro-1,3-butadiene, 2-chloro-1,3-butadiene, methylstyrene, n-butylstyrene, 1-hydroxyethyl methacrylate, 2-hydroxyethyl acrylate, tetrahydrofurfuryl methacrylate, benzyl methacrylate and cyclohexyl methacrylate. Compounds such as benzyl

methacrylate, cyclohexylmethacrylate and tetrahydrofurfuryl methacrylate are currently preferred in low odor formulations, with tetrafurfuryl methacrylate providing not only the least odorous compositions, but also the most rapid-curing.

Polymers containing the grouping $-(CH_2CCl=CHCH_2)_n-$, wherein n is an integer, are well-known in the art under the name neoprene, which is produced by the polymerization of 2-chloro-1,3-butadiene. Further elucidation would be superfluous.

The isocyanate-functional prepolymers which are suitable for use in the practice of this invention are well known. Typically, such prepolymers are adducts or condensation products of polyisocyanate compounds having at least 2 free isocyanate groups and monomeric or polymeric polyols having at least two hydroxy groups, including mixtures of such polyols. The reaction between the polyisocyanate and the polyols is effected employing an excess amount of polyisocyanate to ensure that the reaction product will contain at least 2 free, unreacted isocyanate groups.

Polyols useful in preparing isocyanate-functional prepolymer used in the present invention preferably have an average molecular weight of 300 to 3,000. Suitable polyols include polyalkylene glycols such as polyethylene glycols; polyetherpolyols such as those prepared by addition polymerization of ethylene oxide and a polyol such as trimethylol propane in a ratio to provide unreacted hydroxyl groups in the product; organic hydroxylated elastomers exhibiting second order glass transition temperatures below about 5°C such as poly(butadiene-styrene) polyols and poly (butadiene) polyols; polyester polyols such as are prepared by polymerization polyols, such as diethylene gylcol, trimethylol propane or 1,4-butanediol, with polycarboxylic acids, such as phthalic, terephthalic, adipic, maleic or succinic acids, in a ratio to provide unreacted hydroxyl groups in the product; glyceride esters of hydroxylated fatty acids such as castor oil, glycerol monoricinoleate, blown linseed oil and blown soya oil; and polyesterpolyols such as are prepared by the polymerization of a lactone such as $\varepsilon$ caprolactone.

Polyisocyanates which can be reacted with polyols to form isocyanate-functional prepolymers for use in the present invention can be any monomeric; that is, non-polymeric, isocyanate compound having at least

2 free isocyanate groups, including aliphatic, cycloaliphatic and aromatic compounds. Representative polyisocyanates include, without limitation thereto, 2,4-tolylene diisocyanate, 2,6-tolylene diisocyanate, 4,4'-diphenylmethane diisocyanate, m- and p-phenylene diisocyanate, polymethylene poly(phenyl isocyanate), hexamethylene diisocyanate, 4,4'-methylenebis (cyclohexyl isocyanate), hexamethylene diisocyanate, 4,4'-methylenebis (cyclohexyl isocyanate), isophorone diisocyanate, and other aliphatic cycloaliphatic and aromatic polyisocyanates, and including mixtures of such polyisocyanates. Currently, cycloaliphatic and aromatic polyisocyanates are preferred.

Hydroxy-functional compounds which can be employed to introduce olefinic unsaturation into the isocyanate-functional prepolymer include, without limitation, hydroxyethyl acrylate, hydroxyethyl methacrylate, and allyl alcohol.

The butadiene-based elastomeric polymeric materials which are suitable for use in the practice of this invention are also well known and can be any elastomer derived from 1,3-butadiene or its halogenated analogs which has a glass transition temperature below ambient temperature and preferably not above about 5°C. Suitable elastomers include butadiene homopolymer, copolymers of butadiene with styrene, acrylonitrile and methacrylonitrile, and such homopolymers and copolymers modified by copolymerization therein of trace amounts (0.05 to 5 percent) of a functional comonomer, such as acrylic acid, methacrylic acid, maleic anhydride, fumaric acid, styrene and methyl methacrylate.

Polyvinyl alkyl ethers suitable for use in the adhesive compositions which are described herein are well known in the art. Such ethers will preferably contain one to 8, more preferably one to 4, carbon atoms in the alkyl moiety of said ether. Likewise, styreneacrylonitrile polymers which are suitable for use in the invention are well known.

The adducts of ethylenically unsaturated monofunctional isocyanates and saturated or unsaturated polymeric materials having one or more active hydrogen atom-containing groups selected from the group consisting of -OH, $-NH_2$, -NH-, -SH and -COOH which are suitable for use in the practice of the invention are readily prepared by procedures well known in the art.

Ethylenically unsaturated monofunctional isocyanates are known in the art. Methods of making such compounds, for example, by phosgenation of the corresponding amino alkyl methacrylate, are disclosed in USA Patent Nos. 2,718,516 and 2,821,544, which describe isocyanate esters of acrylic methacrylic and crotonic acids. Isocyanatoethyl methacrylate is a currently preferred compound for forming such adducts. Substantially any saturated or unsaturated having at least two active hydrogen atom-containing group can be reacted with the monofunctional isocyanate esters of the unsaturated monocarboxylic acids. Representative polymeric materials include polyesters, polyethers, polytiols, polyamines and polyamides, with polyethers, such as poly(tetramethylene ether) glycol being currently preferred.

Reactive monomers which have at least one terminal olefinically unsaturated group at least one reactive moiety selected from the group consisting of -OH, $-NH_2$, -NA-, $-\overset{\overset{O}{/\setminus}}{C-C}-$, -SH and -COOH are well known, as are methods for making such compounds and the reactions into which such compounds enter. Representative compounds include 2-hydroxyethyl methacrylate, 2-hydroxyethyl acrylate, allyl alcohol, amino ethyl methacrylate, amino ethyl acrylate, dimethylamino ethyl methacrylate, glycidyl methacrylate, mercapto ethyl methacrylate, acrylic acid, methacrylic acid and crotonic acid. Polymeric materials which have one or more groups which are reactive with such functional groups (-OH, $-NH_2$, etc.) are equally well known. For example, isocyanate-functional polyurethanes are reactive with $-NH_2$ and -NH- groups, polyamines and polymides are reactive with oxirane groups, polyesters, which contain -COOH groups, are reactive with -OH and -SH groups, and polyols, such as polyethers and polythiols are reactive with -COOH groups. The reactive monomer and the polymeric material can be reacted in stoichiometric amounts or, in those cases in which the polymeric material has two or more reactive groups, one can use less than stoichiometric amounts of the reactive monomer if desired, thus leaving some of the polymers reactive groups unreacted.

Elastomeric polymeric materials having second order glass transition temperatures below about 5°C can be effective in modifying room temperature flexibility of the adhesive bond. Especially preferred of

such elastomers are polychloroprene rubber; polybutadiene rubber; butadiene copolymer rubbers such as acrylonitrile-butadiene, carboxylated acrylonitrile-butadiene and styrene-butadiene rubbers; polyacrylate rubbers such as poly(ethyl acrylate) and poly(ehtyl acrylate-halogenated vinyl ether-acrylic acid) rubbers; and ethylene copolymers such as ethylene-vinyl acetate rubbers. Other elastomeric polymers having a glass transition temperature about 5°C can be employed since, other than the low glass transition temperature, there are no other limitations on the identity of the elastomer except for the specific requirements of the particular adhesive being formulated, such as suitable molecular weight, viscosity characteristics and compatibility with the other ingredients of the adhesive.

Such elastomeric polymer materials are particularly beneficial when incorporated in acrylic adhesives comprising at least one olefinically unsaturated polyurethane.

Non-acrylate monomers which can be employed in the herein-described adhesive systems include styrene, chlorostyrene, vinyl styrene and vinyl acetate.

Polymeric materials having an intrinsic viscosity of 0.1 to about 1.3 which are suitable for use in the present invention can be obtained by the polymerization of one or more acrylic and nonacrylic monomers, including mixtures thereof. Exemplary polymeric materials include poly(methyl methacrylate/n-butylacrylate/ethylacrylate) (90/5/5); poly(n-butyl methacrylate/isocutyl methacrylate) (50/50); poly(n-butyl methacrylate) and poly(ethyl methacrylate). Preferably, the viscosity will be about midway in the recited range.

The use of polymeric materials having such intrinsic viscosities is especially beneficial in acrylic adhesives containing homopolymers and copolymers of 1,3-butadiene.

Phosphorous-containing compounds which are suitable for use in the adhesive compositions of the invention to improve metal adhesion, especially to untreated metals, are selected from the group consisting of derivatives of phosphinic acid, phosphonic acid and phosphoric acid having at least one -POH group and at least one organic moiety characterized by the presence of at least one olefinically unsaturated group, which is

preferably terminally located. More particularly, such olefinically unsaturated organophosphorous compounds have the characteristic formula

I. 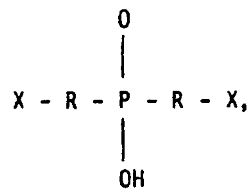

wherein each R is the same or different, and each R is independently a divalent organic radical directly bonded to the phosphorous atom through a carbon-phosphorous bond, said divalent radical being selected from the group consisting of divalent unsubstituted organic radical and divalent organic radical having at least one substituent group selected from the class consisting of halogen, hydroxyl, amino, alkyl radical containing from one to 8, preferably one to 4, carbon atoms and aryl radical having at least one moiety containing at least one aromatic nucleau; at least one X is $CH_2 = C<$ and the other X is a functional group selected from the group consisting of hydrogen, hydroxyl, amino, mercapto, halogen and $CH_2 = C<$ ;

II. 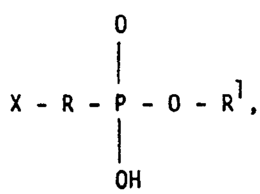

wherein R is as previously defined; $R^1$ is hydrogen or $-R^2-X$, wherein $R^2$ is a divalent organic radical directly bonded to the oxygen radical through a carbon-oxygen bond, said divalent radical being selected from the group consisting of divalent unsubstituted organic radical and divalent organic radical having at least one substituent group selected from the class consisting of halogen, hydroxyl, amino, alkyl radical containing from one to 8 carbon atoms and aryl radical having at least one moiety containing at least one aromatic nucleus; and wherein X is as previously defined, with the proviso that at least one X moiety must be $CH_2 = C<$ ;

III. 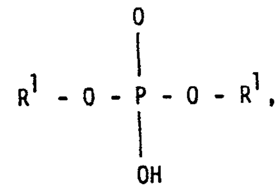

wherein $R^1$ is as previously described, with the proviso that at least one $R^1$ group contains at least one $CH_2 = C<$ moiety.

A currently preferred group of phosphorous-containing compound has the formula

IV. 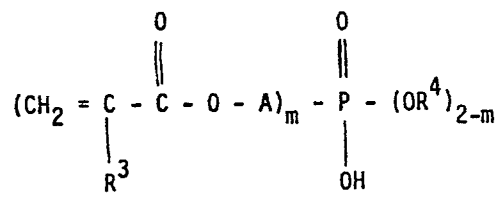 ,

wherein $R^3$ is selected from the group consisting of hydrogen, halogen, an alkyl group having from one to 8, preferably one to 4, carbon atoms, and $CH_2 = CH$ -; $R^4$ is selected from the group consisting of hydrogen, an alkyl group having from one to 8, preferably one to 4 carbon atoms, and a haloalkyl group having one to 8, preferably one to 4, carbon atoms; A is selected from the group consisting of $-R^5O-$ and $(R^6O)_n$, wherein $R^5$ is an aliphatic or cycloaliphatic alkylene group containing from one to 9, preferably 2 to 6, carbon atoms; $R^6$ is an alkylene group having from one to 7, preferably 2 to 4, carbon atoms; n is an integer from 2 to 10, and m is 1 or 2, preferably 1.

In the several formulae I-IV, the divalent organic radicals R and $R^2$ can have a compound structure, that is, the radical can contain at least one, or a series of at least 2, unsubstituted or substituted hydrocarbon group(s) containing or separated from each other by -O-, -S-, -COO-, -NH-, -NHCOO-, and $(R^7O)_p$, wherein $R^7$ is an alkylene group containing from 2 to 7, preferably 2 to 4 carbon atoms, and p is an integer from 2 to 10. Preferably, the divalent radical is an alkylene radical having a straight chain or ring of from one to 22, preferably one to 9, carbon atoms in any non-repeating unit. It will be understood that

divalent radicals having a compound structure would have 2 or more of such straight chains or rings. The divalent radicals can be saturated or unsaturated; aliphatic, cycloaliphatic or aromatic; and, with compound structures, can include mixtures thereof; and generally have from one to about 22 carbon atoms in each chain or ring of carbon atoms.

In the several formulae I-III, representative X-R- and X-$R^2$- radicals include, without limitation thereto, lower alkenyl, cyclohexenyl, hydroxy-lower alkenyl, halo-lower alkenyl, carboxy-lower alkenyl, lower alkyl, amino-lower alkyl, hydroxy-lower alkyl, mercapto-lower alkyl, alkoxy-lower alkyl, halo-lower alkyl, di-phosphonomethyl-amino-lower alkyl, phenyl-hydroxy-phosphonomethyl, aminophenyl-hydroxyphosphonomethyl, halophenyl-hydroxy-phosphonomethyl, phenyl-amino-phosphonomethyl, halophenyl-amino-phosphonomethyl, hydroxy-phosphonomethyl, lower alkyl-hydroxy-phosphonomethyl, halo-lower alkyl-hydroxy-phosphonomethyl and amino-lower alkyl-hydroxy-phosphonomethyl; the term "lower" referring to a group containing from one to 8, preferably one to 4 carbon atoms.

Phosphorous-containing compounds having vinyl unsaturation are preferred over such compounds having allylic unsaturation, with monoesters of phosphinic, phosphonic and phosphoric acids having one unit of vinyl or allylic, especially vinyl, unsaturation presently being preferred. Representative phosphorous-containing compounds include, without limitation, phosphoric acid; 2-methacryloyloxyethyl phosphate; bis-(2-methacryloyloxyethyl) phosphate; 2-acryloyloxyethyl phosphate; bis-(2-acryloyloxyethyl) phosphate; methyl-(2-methacryloyloxyethyl) phosphate; ethyl methacryloyloxyethyl phosphate; methyl acryloyloxyethyl phosphate; ethyl acryloyloxyethyl phosphate; compounds of Formula IV wherein $R^3$ is hydrogen or methyl and $R^4$ is propyl, isobutyl, ethylhexyl, halopropyl, haloisobutyl or haloethylhexyl; vinyl phosphonic acid; cyclohexene-3-phosphonic acid; alpha-hydroxybutene-2-phosphonic acid; 1-hydroxy-1-phenylmethane-1,1-diphosphonic acid; 1-hydroxy-1-methyl-1-1-diphosphonic acid; 1-amino-1-phenyl-1,1-diphosphonic acid; 3-amino-1-hydroxypropane-1,1-diphosphonic acid; amino-tris (methylenephosphonic acid); gamma-aminopropylphosphonic acid; gamma-glycidoxypropylphosphonic acid; phosphoric acid-mono-2-aminoethyl ester; allyl phosphonic acid; allyl phosphinic acid; -methacryloyl-oxyethyl phosphinic acid; diallylphosphinic acid; bis( -methacryloyl-oxyethyl) phosphinic acid and allyl methacryloyloxyethyl phosphinic acid.

Peroxygen compounds which are suitable for use in the present invention are selected from the group consisting of hydrogen peroxide, organic peroxyesters of peroxymonocarboxylic acids, full and partial organic peroxyesters of monoperoxy dicarboxylic acids and diperoxydicarboxylic acids, full and partial organic peroxyesters of peroxymonocarbonic acids and peroxydicarbonic acids, full and partial esters of organic peroxymonocarbonic and peroxydicarbonic acids, and organic hydroperoxides. A partial but representative listing of organic peroxygen compounds which can be utilized in the practice of the invention include t-butyl peroxyacetate, t-butyl peroxybenzoate, t-butyl peroxy-(2-ethylhexanoate), t-butylperoxyisobutyrate, o,o-t-butyl o-isopropyl monoperoxy carbonate, t-butylperoxypivalate, 2,5-dimethyl-2,5-di(benzoyl-peroxy)hexane, t-butylperoxy(2-ethylbutyrate), 2,5-dimethyl-2,5-di(2-ethyl-hexanoyl peroxy) hexane, di-t-butyl diperoxyphthalate, o,o-t-butyl o-hydrogenmonoperoxymaleate, di-sec-butyl peroxydicarbonate, diisopropylperoxy dicarbonate, dicyclohexyl peroxydicarbonate, t-butyl peroxycrotonate, N,N-diethyl-t-butyl peroxycarbonate, N,N-diphenyl t-butyl peroxycarbonate, acetyl cyclohexylsulfonyl peroxide, cumene hydroperoxide, t-butyl hydroperoxide, methyl ethyl ketone hydroperoxide, and diisopropyl benzene hydroperoxide. The peroxygen compound is employed in an amount in the range from 0.05 to 10, preferably 0.2 to 3, most preferably 0.5 to 1.5, percent by weight, based on the total weight of the package into which it is incorporated.

Bicyclic amidine compounds which are employed in the practice of this invention have the characteristic formula:

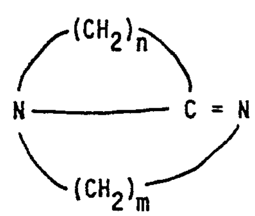

wherein m and n can be the same or different and each is an integer in the range from 3 to 5. 1,8-diaza-bicyclo [5.4.0] undec-7-ene and 1,5-diaza-bicyclo [4.3.0] non-5-ene are preferred. These bicyclic amidine compounds are known articles of commerce and have been previously employed in combination with urethane, epoxy and organosilicone adhesive and coating compositions. For example, Ikeda et al USA Patent 4,144,221 disclose the use of bicyclic amidines for the elevated temperature curing

of coating compositions comprising organopolysiloxane compounds containing a hydroxyl group or an alkoxy group bonded to a silicon atom. Chang USA Patents 4,496,706 and 4,515,933 discloses the use of bicyclic amidine organic acid salts for the elevated temperature curing of polyurethane adhesive compositions. Jefferson et al USA Patent 4,309,511 disclose the use of bicyclic amidines in combination with cobalt salts and copper salts to enhance the cure rate of molding compositions comprising an unsaturated polyester resin and an unsaturated monomer copolymerizable therewith. Vasta USA Patent discloses the combination of bicyclic amidines, polyamines and phenol as a curing agent for the low temperature cure of coating compositions comprising an admixture of acrylic polymers and epoxy resins. None of these references teach the invention described herein. The bicyclic amidine activator compound is employed in amounts in the range from 0.01 to 10, preferably 0.1 to 5, most preferably 0.5 to 3, percent by weight, based on the total weight of the adhesive composition.

Cupric copper compounds which can be employed in the practice of the invention to increase the polymerization rate include cupric chloride, cupric acetate, cupric naphthenate, and cupric acetyl acetonate. The copper compound is preferably employed in an amount in the range from 0.001 to 10, most preferably 0.001 to 1, percent by weight, based on the total weight of the adhesive composition.

The herein-described adhesive compositions are prepared by conventional methods, such as are disclosed in USA Patent Nos. 3,832,774 and 3,890,407, both of which disclosures are incorporated herein by reference. Typically, the compositions are provided as two-part systems, with the sulfur compound and peroxygen compound being kept separate from the metal compound until prior to use. The adhesive systems are especially useful for bonding metal surfaces such as steel, aluminum and copper and plastic to a variety of substrates, including metals, solid plastics, fibers, glass, ceramics, wood, and the like; as well as plastic surfaces to the same or dissimilar materials. Bonding can be effected even to oily metal surfaces which are otherwise clean without an extensive pretreatment as is usually required with the vast majority of currently available primers and adhesives. Additionally, the adhesive systems of this invention provide effective bonding at room temperature, thus heat is not required either for applying the adhesive systems to the substrates or for curing. They can also be employed on porous substrates, unlike the anaerobic adhesives which require the exclusion of air and thus cannot be used on surfaces containing air in their pores.

The invention is illustrated by the following examples, wherein all parts, proportions and percentages are by weight unless otherwise indicated.

## EXAMPLE I

The following formulation is prepared:

| FORMULATION | I | II |
|---|---|---|
| Bisphenol A-fumarate polyester | 48.54 | 46.73 |
| Methyl methacrylate | 48.54 | 46.73 |
| Cumene hydroperoxide | 2.91 | 0 |
| 1,8-diaza-bicyclo [5.4.0] undec-7-ene | 0 | 6.54 |

Equal amounts by volume of Formulations I and II are thoroughly mixed. Gel time for the mixed adhesive is 60 minutes. The gel time is determined by dipping a glass stirring rod into the mixed adhesive composition and noting the time at which the composition no longer flowed.

## EXAMPLE II

A two-part adhesive system having the following formulation is prepared:

| PART | I | II |
|---|---|---|
| VTBNX[a] | 48.55 | 46.42 |
| Triethylene glycol dimethacrylate | 48.55 | 46.42 |
| 1,8-diaza-bicyclo [5.4.0] undec-7-ene | 2.90 | - |
| Cumene hydroperoxide | - | 6.50 |
| Cupric chloride | - | 0.04 |
| Hydroxyethyl methacrylate | - | 0.63 |

[a] = vinyl-terminated butadiene acrylonitrile copolymer.

Equal weight amounts of the two packs are thoroughly mixed. Following the procedure of Example I, the gel time is found to be 24 seconds.

EXAMPLE III

The following two-pack adhesive formulation is prepared:

| PACK | I | II |
|---|---|---|
| Butadiene acrylonitrile copolymer | 5.20 | 4.98 |
| VTBNX[a] | 27.51 | 26.33 |
| Tetrahydrofurfuryl methacrylate | 34.84 | 33.34 |
| 1,8-diaza-bicyclo [5.4.0] undec-7-ene | - | 6.50 |
| Curpic chloride | - | 0.03 |
| Hydroxyethyl methacrylate | - | 0.57 |
| Cumene hydroperoxide | 2.91 | - |
| Calcium Carbonate | 29.51 | 28.24 |

[a] = vinyl-terminated butadiene acrylonitrile copolymer.

Equal parts of the individual packages are intermixed. Following the procedure of Example I, the gel time is determined to be 1.5 minutes.

EXAMPLE IV

The following two-part adhesive system is prepared:

| PART | I | II |
|---|---|---|
| Polyether urethane | 19.74 | 18.89 |
| Polyester urethane | 14.25 | 13.64 |
| Bisphenol A fumarate polyester | 10.97 | 10.50 |
| Methyl methacrylate | 15.35 | 14.69 |
| Trimethylolpentane trimethacrylate | 5.49 | 5.25 |
| Cumene hydroperoxide | 2.91 | - |
| 1,8-diaza-bicyclo [5.4.0] undec-7-ene | - | 6.50 |
| Cupric chloride | - | 0.03 |
| Hydroxyethyl methacrylate | - | 0.57 |
| Calcium carbonate | 31.29 | 29.94 |

Equal parts by weight of parts 1 and 2 are thoroughly intermixed. Following the procedure of Example I, the gel time is found to be 25 seconds.

What is claimed is:

1. An adhesive composition comprising at least one polymerizable olefinically unsaturated monomer and a polymerizing agent, characterized in that said polymerizing agent comprises an admixture consisting essentially of at least one free radical source selected from the group consisting of hydrogen peroxide, organic hydroperoxides organic peroxyesters, peroxycarbonates, peroxyketones and diacyl peroxides; and at least one bicyclic amidine activator compound having the formula

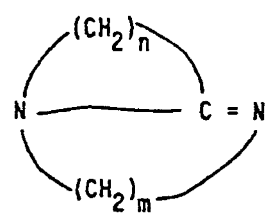 ;

wherein m and n can be the same or different and each is an integer in the range from 3 to 5.

2. An adhesive composition according to claim 1 wherein said free radical source is present in an amount in the range from 0.05 to 10 weight percent, based on total weight of said adhesive composition.

3. An adhesive composition according to claim 2 wherein said activator compound is present in an amount in the range from 0.01 to 10 parts by weight, based on total weight of said adhesive composition.

4. An adhesive composition according to any of claims 1 to 3 wherein said adhesive composition contains at least one cupric salt.

5. An adhesive composition formed by combining two parts, one part comprising an adhesive base and the other part comprising at least one activator compound for said adhesive base; characterized in that

(1) said adhesive base comprises at least one polymerizable olefinically unsaturated monomer and at least one free radical source selected from the group consisting essentially of hydrogen peroxide, organic hydroperoxides, organic peroxyestersperoxycarbonates, peroxyketones and diacyl peroxides; and

(2) said activator compound is interactive with said free radical source to initiate and propogate polymerization of said polymerizable monomer and consists essentially of at least one bicyclic amidine compound having the formula

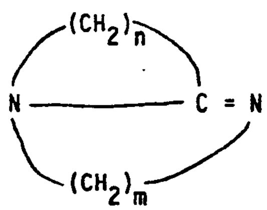 ;

wherein m and n can be the same or different and each is an integer in the range from 3 to 5.

6. An adhesive composition according to claim 5 wherein said adhesive base comprises an admixture of

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein of trace amounts up to 5 percent by weight, based on weight of modified elastomeric polymeric material, of at least one functional monomer; and

(d) mixtures thereof;

(3) at least one polymer-in-monomer syrup consisting essentially of

(a) from 10 to 98 percent by weight of at least one olefinically unsaturated compound having at least one $-\overset{|}{C}=\overset{|}{C}-$ group, the amount being in addition to the amount of olefinically unsaturated monomer (A);

(b) from 10 to 98 percent by weight of at least one polymer derived from such (3)(a) monomers; and

(c) from 0 to 30 percent by weight of a polymer containing the group $-(CH_2CCl=CHCH_2)_n-$, wherein n is an integer;

wherein (3)(b) is present as a partial polymerization of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer in which syrup the amount of (3)(b) derived from (3)(a) is in the range from 2 to 90 percent by weight, based on the total weight of (3)(a), (3)(b) and (3)(c), wherein the amount of said (B)(3)(a) monomer is in addition to the amount of said (A) monomer.

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one monomer selected from the group consisting of styrene and alkyl or hydroxyalkyl esters of acrylic or methacrylic acid, said ester having from one to 18 carbon atoms in the alkyl moiety;

(6) at least one polymeric material having at least one terminal olefinically unsaturated group, said polymeric material being selected from the group consisting of, (1) at least one adduct of at least one ethylenically unsaturated monofunctional isocyanate and at least one polymeric material containing one or more active hydrogen atom-containing moiety(ies) selected from the group consisting of -OH, $-NH_2$, -NH-, $-\overset{O}{\overset{/\backslash}{C-C}}-$, -SH and -COOH; and, (2) at least one adduct of at least one reactive monomer having at least one terminal olefinically unsaturated group and at least one reactive moiety selected from the group consisting of -OH, $-NH_2$, -NH-, $-\overset{O}{\overset{/\backslash}{C-C}}-$, -SH and -COOH; and at least one polymeric material which contains at least one moiety which is reactive with said reactive moiety of said reactive monomer, provided that, when said reactive moiety is -OH, said polymeric material does not contain a reactive -NCO group; and

(7) mixtures of such polymeric materials; and

(C) at least one free radical source selected from the group consisting of hydrogen peroxide, organic peroxyesters and organic hydroperoxides, peroxycarbonates, peroxyketones and diacyl peroxides; and

said activator compound-containing other part comprises an admixture of

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein of tract amounts up to 5 percent by weight, based on weight of modified elastomeric polymeric material, of at least one functional monomer; and

(d) mixtures thereof;

(3) at least one polymer-in-monomer syrup consisting essentially of

(b) from 2 to 90 percent by weight of at least one polymer derived from such (3)(a) monomers; and

(a) from 10 to 98 percent by weight of at least one olefinically unsaturated monomer compound having at least one $-\overset{|}{C}=\overset{|}{C}-$ group;

(c) from 0 to 30 percent by weight of a polymer containing the group $-(CH_2CCl=CHCH_2)_n-$, wherein n is an integer;

wherein (3)(b) is present as a partial polymerization of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer in which syrup the amount of (3)(b) derived from (3)(a) is in the range from 2 to 90 percent by weight, based on the total weight of (3)(a), (3)(b) and (3)(c), wherein the amount of said (B)(3)(a) monomer is in addition to the amount of said (A) monomer;

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one monomer selected from the group consisting of styrene and alkyl or hydroxyalkyl esters of acrylic or methacrylic acid, said ester having from one to 18 carbon atoms in the alkyl moiety;

(6) at least one polymeric material having at least one terminal olefinically unsaturated group, said polymeric material being selected from the group consisting of, (1) at least one adduct of at least one ethylenically unsaturated monofunctional isocyanate and at least one polymeric material containing one or more active hydrogen atom-containing moiety(ies) selected from the group consisting of -OH, $-NH_2$, -NH-, 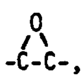, -SH and -COOH; and, (2) at least one adduct of at least one reactive monomer having at least one terminal olefinically unsaturated group and at least one reactive moiety selected from the group consisting of -OH, $-NH_2$, -NH-, 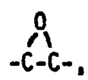, -SH and -COOH; and at least one polymeric material which contains at least one moiety which is reactive with said reactive moiety of said reactive monomer, provided that, when said reactive moiety is -OH, said polymeric material does not contain a reactive -NCO group; and

(7) mixtures of such polymeric materials; and

(C) at least one bicyclic amidine activator compound having the formula

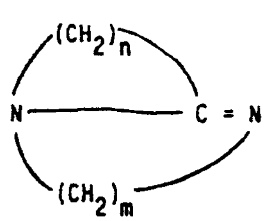 ;

wherein m and n can be the same or different and each is an integer in the range from 3 to 5.

7. An adhesive composition according to claim 5 or 6 wherein said free radical source is present in an amount in the range from 0.05 to 10 percent by weight and said activator compound is present in an amount in the range from 0.01 to 10 percent by weight, said percentages being based on the total weight of said two parts.

8. An adhesive composition according to claim 6 wherein at least one of said adhesive base and said activator compound-containing other part contains at least one organophosphorus compound having the formula

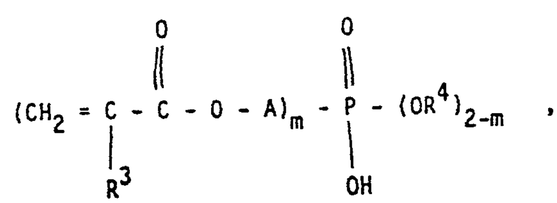

wherein $R^3$ is selected from the group consisting of hydrogen, halogen, an alkyl group having from one to 8, preferably one to 4, carbon atoms, and $CH_2 = CH -$; $R^4$ is selected from the group consisting of hydrogen, an alkyl group having from one to 8 carbon atoms and a haloalkyl group having one to 8 carbon atoms; A is selected from the group consisting of $-R^5O-$ and $(R^6O)_n$, wherein $R^5$ is an aliphatic or cycloaliphatic alkylene group containing from one to 9 carbon atoms; $R^6$ is an alkylene group having from one to 7 carbon atoms; n is an integer from 2 to 10, and m is 1 or 2.

9. An adhesive composition according to any of claims 5 to 8 wherein said activator compound-containing other part contains at least one cupric salt.

10. An adhesive composition according to any of claims 1 to 9 wherein said activator compound comprises 1,8-diaza-bicyclo [5.4.0] undec-7-ene.